# EUROPÄISCHE PATENTANMELDUNG

(11) **EP 2 360 813 A1**
(43) Veröffentlichungstag der Anmeldung: **24.08.2011**
(21) Anmeldenummer: 10405028.1
(22) Anmeldetag: 12.02.2010
(51) Int. Cl.: H02K 1/14

(54) **Dynamoelektriches Maschine**

(71) Anmelder: Cueni, Hansjörg, 6362 Stansstad (CH)
(72) Erfinder: Cueni, Hansjörg, 6362 Stansstad (CH); Lindegger, Markus, 3427 Utzenstorf (CH)
(74) Vertreter: Nückel, Thomas

(57) **Zusammenfassung**

Die erfindungsgemässe dynamoelektrische Maschine weist mehrere Zähne (6; 16) auf, welche Wicklungen (15) tragen. Die benachbarten Zähne (6; 16) sind formschlüssig miteinander verbunden, wobei der Formschluss (17) in mindestens vier Richtungen wirkt. Zudem sind mehrere Permanentmagnete (5; 32, 33) vorgesehen, die gegenüber den Zähnen (6; 16) angeordnet sind.

## Beschreibung

### Technisches Gebiet

Die Erfindung betrifft eine dynamoelektrische Maschine, die als elektrischer Antrieb oder als Generator dienen kann.

### Stand der Technik

Aus der Druckschrift US 7 342 344 B2 ist ein Stator eines Aussenläufermotors für eine Waschmaschine bekannt. Der Stator umfasst mehrere Abschnitte, die ringförmig angeordnet sind. Jeder der Abschnitte wiederum besteht aus mehreren Zähnen. In den Bereichen, in denen die Abschnitte miteinander verbunden werden sollen, weisen sie eine Nut und eine Feder auf, die bei der Montage zusammengefügt werden. Damit die einzelnen Abschnitte zusammengehalten werden, werden sie an den Verbindungsstellen miteinander verschweisst, so dass eine kraftschlüssige Verbindung zwischen den einzelnen Abschnitten entsteht. Diese Ausführungsform hat den Nachteil, dass die einzelnen Abschnitte nicht nur zusammengesetzt, sondern auch noch miteinander verschweisst werden müssen. Darüber hinaus ist es nicht möglich, die Zwischenräume zwischen den einzelnen Zähnen vollständig mit Wicklungen auszufüllen, was sich ungünstig auf die Energiedichte und auf den Wirkungsgrad auswirkt.

Aus der Druckschrift US 2007/0252447 A1 ist ein weiterer Elektromotor mit einem Stator bekannt. Der Stator umfasst ein ringförmiges Joch, das auf der Innenseite Aufnahmen für eine Reihe von Zähnen aufweist. Die Zähne werden mit Wicklungen versehen und anschliessend in die entsprechenden Aufnahmen im Joch gesteckt. Diese Ausführungsform hat zum einen den Nachteil, dass das Joch als zusätzliches Bauteil erforderlich ist und zum anderen den Nachteil, dass insgesamt relativ viel Bauraum benötigt wird.

### Darstellung der Erfindung

Eine Aufgabe der Erfindung ist es, eine dynamoelektrische Maschine anzugeben, die im Hinblick auf den Wirkungsgrad optimiert ist.

Vorteilhafter Weise ist die Maschine einfach und kostengünstig herstellbar. So kann beispielsweise der Wicklungsdraht auf die einzelnen Zähne der Maschine automatisch, schnell und einfach gewickelt werden.

Ein weiterer Vorteil der erfindungsgemässen Maschine liegt darin, dass die Wicklungsdichte ausserordentlich hoch ist.

Die Aufgabe wird durch eine dynamoelektrische Maschine mit den Merkmalen gemäss Patentanspruch 1 gelöst.

Die erfindungsgemässe dynamoelektrische Maschine weist mehrere Zähne auf, welche Wicklungen tragen. Die benachbarten Zähne sind formschlüssig miteinander verbunden, wobei der Formschluss in mindestens vier Richtungen wirkt. Zudem sind mehrere Permanentmagnete vorgesehen, die gegenüber den Zähnen angeordnet sind.

Vorteilhafte Weiterbildungen der Erfindung ergeben sich aus den in den abhängigen Patentansprüchen angegebenen Merkmalen.

Bei einer Ausführungsform der erfindungsgemässen Maschine erfolgt der Formschluss zwischen den Zähnen durch eine hintergreifende Verbindung. Dadurch wird auf einfache Weise eine sichere, stabile und dauerhafte Verbindung zwischen den einzelnen Zähnen geschaffen.

Bei einer weiteren Ausführungsform der erfindungsgemässen Maschine erfolgt der Formschluss zwischen den Zähnen durch eine schwalbenschanzförmige Verbindung. Diese Art der Verbindung ist einfach und kostengünstig herstellbar und ist darüber hinaus selbst zentrierend, so dass eine hohe Fertigungsgenauigkeit erreichbar ist.

Bei einer anderen Ausführungsform der erfindungsgemässen Maschine sind die Zähne ringförmig angeordnet. Damit kann ein rotierender Antrieb oder ein rotierender Generator hergestellt werden.

Vorteilhafter Weise sind bei der erfindungsgemässen Maschine die Permanentmagnete konzentrisch zu den Zähnen angeordnet.

Bei einer Weiterbildung der erfindungsgemässen Maschine sind die Zähne linear angeordnet. Damit kann ein Linearantrieb oder ein Lineargenerator hergestellt werden.

Zur Lösung der Aufgabe wird ferner vorgeschlagen, dass bei der erfindungsgemässen Maschine die Zähne in einer ersten Reihe und in einer zweiten Reihe und die Permanentmagnete dazwischen angeordnet sind. Auf diese Weise kann erreicht werden, dass die beiden Zahnreihen in Bezug auf die Permanentmagnete einen definierten, konstanten, sich selbst einstellenden Abstand einnehmen. Auf diese Weise entsteht eine Art Selbstzentrierung der beiden Zahnreihen in Bezug auf die Permanentmagnete.

Darüber hinaus kann bei der erfindungsgemässen Maschine vorgesehen sein, dass die Zähne einen im Wesentlichen viereckigen Querschnitt aufweisen.

Zudem ist es von Vorteil, wenn bei der erfindungsgemässen Maschine die Zähne jeweils einen Stapel Blechlamellen aufweisen.

Nach einem weiteren Merkmal der erfindungsgemässen Maschine weist der Blechlamellenstapel äussere Blechlamellen und innere Blechlamellen auf, wobei die äusseren Blechlamellen eine kleinere Querschnittsfläche als die inneren Blechlamellen haben. Auf diese Weise kann sich die Wicklung an den Enden des Blechlamellenstapels noch besser an den Blechlamellenstapel anschmiegen, was sich letztlich positiv auf den Wirkungsgrad auswirkt.

Bei einer Weiterbildung der erfindungsgemässen Maschine ist die Kornorientierung in den Blechlamellen auf die Richtung des magnetischen Flusses abgestimmt. Auch dies verbessert den Wirkungsgrad der Maschine.

Bei einer anderen Weiterbildung der erfindungsgemässen Maschine ist vorgesehen, dass die benachbarten Zähne zueinander isoliert sind. Auch dies führt zu einer Verbesserung des Wirkungsgrads der Maschine.

Nach einem weiteren Merkmal der Erfindung kann die formschlüssige Verbindung zwischen den benachbarten Zähnen elektrisch isolierend ausgebildet sein. Dies dient ebenfalls der Verbesserung des Wirkungsgrads der Maschine.

Schliesslich kann die erfindungsgemässe Maschine als Antrieb für ein Fahrzeug, einen Aufzug, einen Ventilator oder als Generator verwendet werden.

### Kurze Beschreibung der Zeichnungen

Im Folgenden wir die Erfindung mit mehreren Ausführungsbeispielen anhand von neun Figuren weiter erläutert.
- Figur 1: zeigt eine erste mögliche Ausführungsform der erfindungsgemässen Maschine in der Ansicht von vorn.
- Figur 2: zeigt die erste Ausführungsform der erfindungsgemässen Maschine in einer dreidimensionalen Ansicht.
- Figur 3: zeigt einen Teil der erfindungsgemässen Maschine in einer dreidimensionalen Ansicht.
- Figur 4: zeigt einen noch keine Wicklungen tragenden Zahn der erfindungsgemässen Maschine in einer Ansicht von vorn.
- Figur 5: zeigt den noch keine Wicklungen tragenden Zahn der erfindungsgemässen Maschine in einer dreidimensionalen Ansicht.
- Figur 6: zeigt den Wicklungen tragenden Zahn der erfindungsgemässen Maschine in einer dreidimensionalen Ansicht.
- Figur 7: zeigt drei formschlüssig miteinander verbundene Zähne der erfindungsgemässen Maschine in einer Ansicht von vorn.
- Figur 8: zeigt eine weitere mögliche Ausführungsform der erfindungsgemässen Maschine in der Ansicht von vorn.
- Figur 9: zeigt eine dritte mögliche Ausführungsform der erfindungsgemässen Maschine in der Ansicht von vorn.

### Wege zur Ausführung der Erfindung

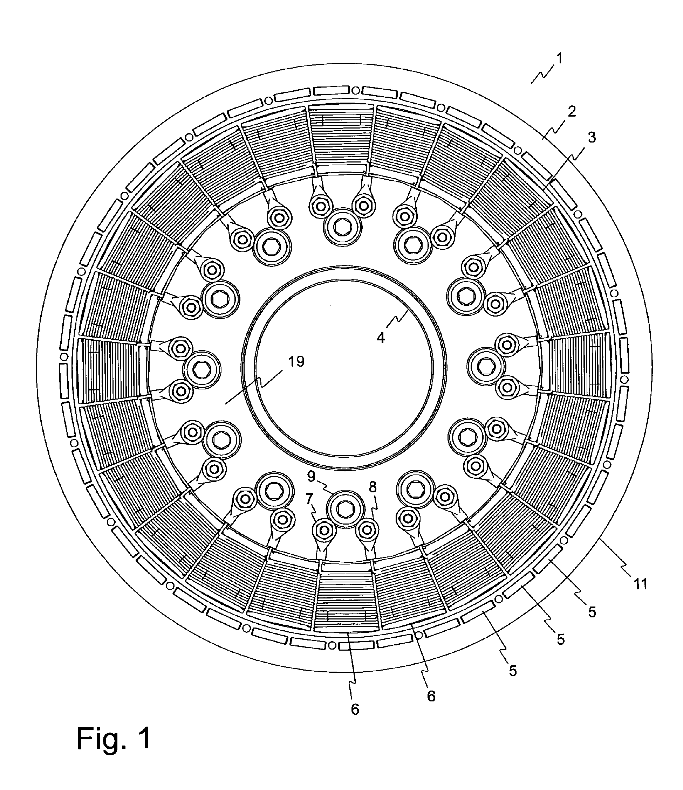

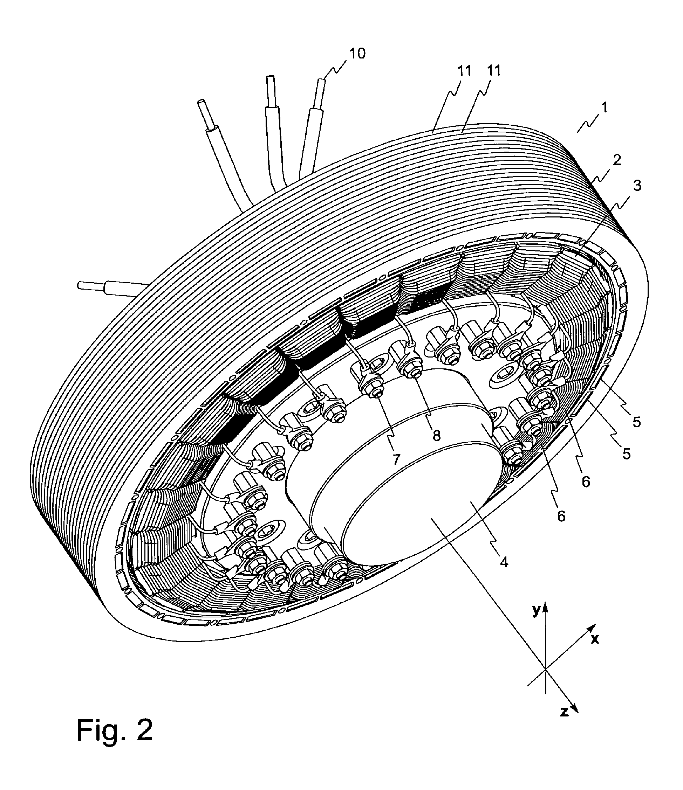

Die erfindungsgemässe dynamoelektrische Maschine kann als elektrischer Antrieb oder als Generator dienen. Der Aufbau einer ersten möglichen Ausführungsform der erfindungsgemässen Maschine 1 ist in Figur 1 in der Ansicht von vorn und in Figur 2 in einer dreidimensionalen Ansicht gezeigt. Diese erste Ausführungsform der dynamoelektrischen Maschine 1, oder im Folgenden kurz Maschine genannt, ist als Aussenläufer ausgebildet und umfasst einen ringförmigen Rotor 2 und einen innerhalb des Rotors 2 konzentrisch angeordneten Stator 3. Der Stator 3 wiederum ist mit einer Welle 4 verbunden und umfasst eine Reihe von Zähnen 6, welche jeweils Wicklungen tragen. Ein Teil der Kontakte 7 und 8 der Wicklungen ist auf der Vorderseite eines Trägerelements 19 angeordnet. Der andere Teil der Wicklungsanschlüsse 7 und 8 ist auf der Rückseite des Trägerelements 19 angeordnet. Die Energieversorgung der Wicklungen 15 erfolgt über einen Anschluss 10.

Der Rotor 2 wird über ein oder mehrere in den Figuren nicht gezeigte Kugellager auf der Welle 4 drehbar gelagert. Der Rotor 2 umfasst einen Rotorring 11, in dem Permanentmagnete 5 angeordnet sind.

Der Rotorring 11 wird zur Vermeidung von Wirbelströmen aus vielen einzelnen, voneinander isolierten Blechlamellen 11 aufgebaut. Diese Blechlamellen können aus nicht kornorientiertem oder auch aus kornorientiertem Dynamoblech hergestellt werden.

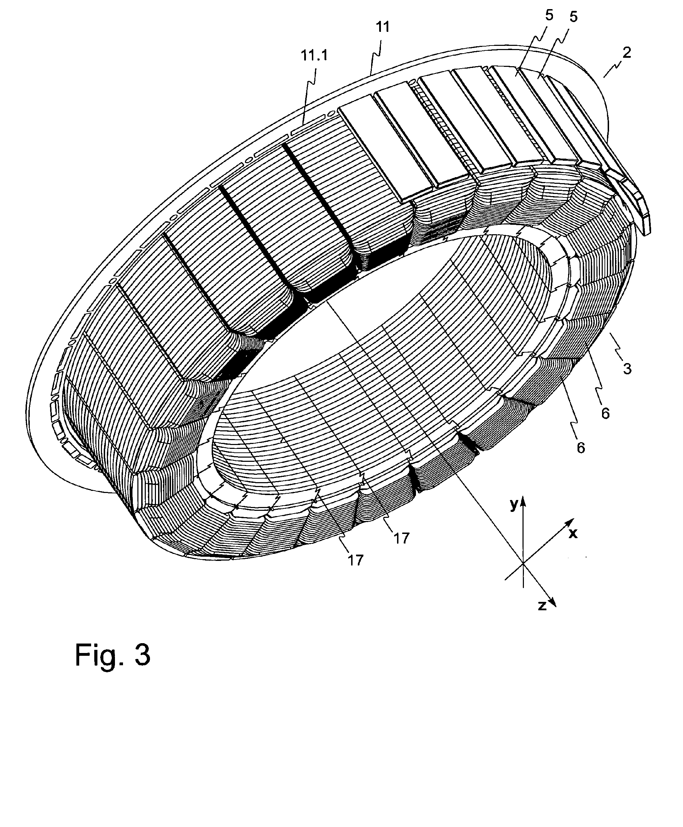

Figur 3 zeigt in einer weiteren dreidimensionalen Ansicht die erfindungsgemässe Maschine, wobei nur Teile des Rotors 2 dargestellt sind. Vom Rotorring 11 ist nur eine der ringförmigen Blechlamellen gezeigt. Sämtliche ringförmigen Blechlamellen haben die selbe Geometrie. Die ringförmigen Blechlamellen weisen eine Reihe von Aufnahmen 11.1 für die Permanentmagnete 5 auf.

Wie aus Figur 3 zu entnehmen ist, sind die benachbarten Zähne 6 auf der der Drehachse z zugewandten Seite über einen Formschluss 17 miteinander verbunden.

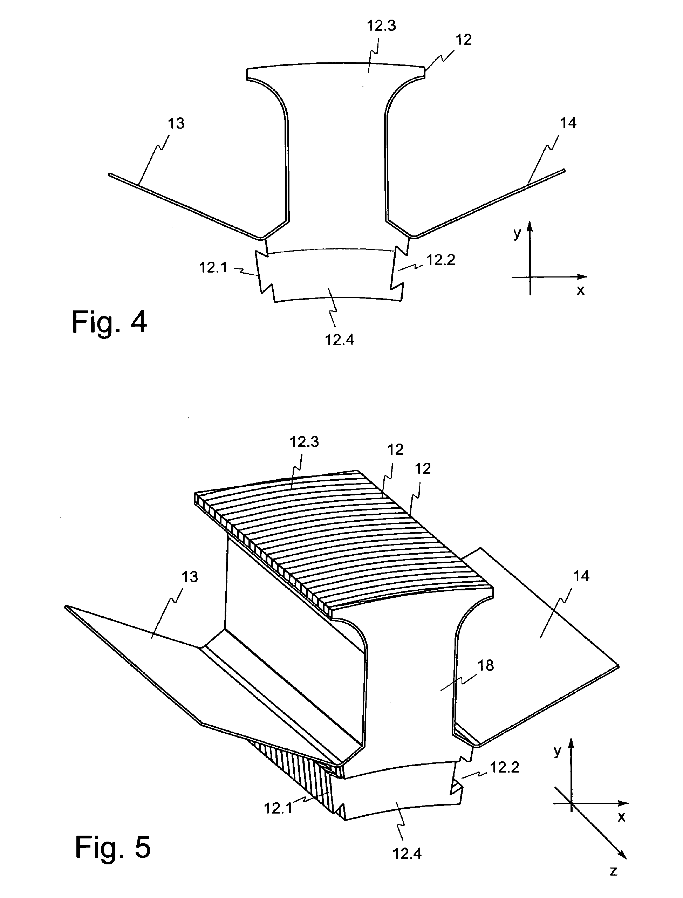

Figur 4 zeigt einen noch keine Wicklungen tragenden Zahn 6 des Stators 3 in der Ansicht von vorn und Figur 5 den noch keine Wicklungen tragenden Zahn in einer dreidimensionalen Ansicht. Der Zahn 6 weist im Zahnkopf 12.4 auf der einen Seite einen schwalbenschwanzförmigen Steg 12.1 und auf der anderen Seite eine schwalbenschwanzförmige Ausnehmung oder Nut 12.2 auf. Die übrigen Zähne 6 des Stators 3 sind ebenso aufgebaut. Die Geometrie des schwalbenschwanzförmigen Stegs 12.1 ist auf die schwalbenschwanzförmige Ausnehmung 12.2 abgestimmt. Auf diese Weise kann der schwalbenschwanzförmige Steg 12.1 eines ersten Zahns mit der schwalbenschwanzförmigen Ausnehmung 12.2 eines zweiten Zahns formschlüssig verbunden werden, indem der schwalbenschwanzförmige Steg 12.1 des ersten Zahns parallel zur z-Achse in die schwalbenschwanzförmige Ausnehmung 12.2 des zweiten Zahns gesteckt wird.

Wie aus Figur 5 zu erkennen ist, wird der Blechkern des Zahns 6 durch einen Stapel aus Blechlamellen 12 gebildet. Jede dieser Blechlamellen 12 weist die in Figur 4 gezeigte Form auf. Die Blechlamellen 12 können aus einem streifenförmigen Blech geschnitten werden und haben vorzugsweise die gleiche Kornorientierung. Die Orientierung des Korns im Zahn 6 wird vorteilhafterweise so gewählt, dass sie mit dem Verlauf des magnetischen Flusses so weit wie möglich übereinstimmt.

Bei dem Stapel Blechlamellen können an den beiden Stapelenden zusätzliche, besonders geformte Blechlamellen 18 vorgesehen sein, die dann die äussersten Blechlamellen bilden. Diese Blechlamellen 18 haben eine kleinere Querschnittsfläche als die inneren Blechlamellen 12. Auf diese Weise braucht der Wickeldraht 15 an den Kanten des Zahns 6 nicht so stark gekrümmt zu sein und es entstehen zwischen den Enden des Blechlamellenstapels und der Wicklung keine Luftspalte.

In dem Bereich, in dem der Zahn 6 mit Drahtwicklungen bewickelt werden soll, befindet sich eine Isolationsschicht 13, 14, welche auch als Nutenpapier bezeichnet wird. In den Figuren 4 und 5 liegt das Nutenpapier 13 auf der linken Seite des Zahns 6 und das Nutenpapier 14 auf der rechten Seite des Zahns 6 an.

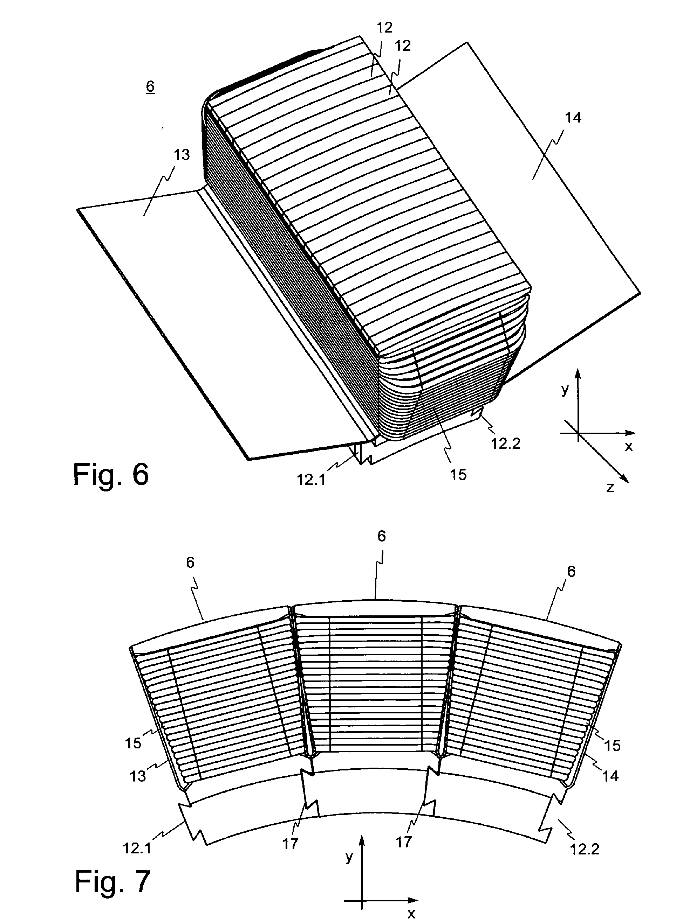

Figur 6 zeigt den Wicklungen 15 tragenden Zahn 6 in einer dreidimensionalen Ansicht. Nachdem der Zahn mit der Wicklung 15 versehen ist, werden die überstehenden Bereiche der beiden Nutenpapiere 13 und 14 nach oben in Richtung des Zahnfusses 12.3 geklappt. Dadurch sind die Wicklungen 15 benachbarter Zähne 6 voneinander elektrisch isoliert.

In einer Dimension kann eine Kraft in die eine Richtung oder die entgegengesetzte Richtung wirken. Im Folgenden gilt, dass eine Dimension also zwei Richtungen hat. Folglich kann ein Bauteil, dass in zwei Dimensionen beweglich ist, in vier Richtungen bewegt werden.

Für den Formschluss bedeutet das, dass eine Sperrung in einer Dimension bewirkt, dass das Bauteil sich in dieser Dimension weder in die eine noch in die entgegengesetzte Richtung bewegen kann. Ist also beispielsweise ein erstes Bauteil in einer Dimension formschlüssig mit einem zweiten Bauteil verbunden, so ist die Bewegungsfreiheit des ersten Bauteils gegenüber dem zweiten Bauteil in zwei Richtungen gesperrt.

Darüber hinaus kann ein Formschluss zwischen zwei Bauteilen auch in zwei oder drei Dimensionen vorliegen. Wird beispielsweise ein Bauteil zwischen einer Schraube und einer Mutter gehalten, ist dieses Bauteil in gegenüber der Schraube und der Mutter allen drei Dimensionen und damit in sechs Richtungen in seiner Bewegungsfreiheit gesperrt.

Wird hingegen beispielsweise ein Stift in einem Sackloch gehalten, liegt ein Formschluss in fünf Richtungen vor. Der Stift ist also in zwei Dimensionen vollständig und in der dritten Dimension zum Teil in seiner Bewegungsfreiheit gesperrt. In die sechste Richtung ist der Stift frei beweglich. Die sechste Richtung entspricht der Richtung, in der der Stift wieder aus dem Sackloch herausgezogen werden kann.

In Figur 7 sind beispielhaft drei formschlüssig miteinander verbundene Zähne 6 in einer Ansicht von vorn dargestellt. Durch den schwalbenschwanzförmigen Formschluss zwischen den benachbarten Zähnen 6 wird bewirkt, dass die Bewegungsfreiheit der benachbarten Zähne 6 in vier Richtungen gesperrt ist, nämlich entlang der x-Achse und entlang der y-Achse. Entlang der z-Achse entsteht durch den schwalbenschwanzförmigen Formschluss keine Sperrung der Bewegungsfreiheit.

Statt des schwalbenschanzförmigen Formschlusses 17 kann auch ein anders geformter Formschluss, wie beispielsweise ein T-förmiger, ein kreisförmiger oder ein ovaler Formschluss verwendet werden. Vorteilhafter Weise weist bei dem Formschluss 17 die Aussparung 12.2 im Zahnkopf 12.4 eine Hinterformung auf und der Steg 12.1 bildet dazu das entsprechend geformte Gegenstück.

Darüber hinaus kann auch ein mechanischer Anschlag in z-Richtung vorgesehen sein, um die Position der Zähne 6 in z-Richtung zu definieren.

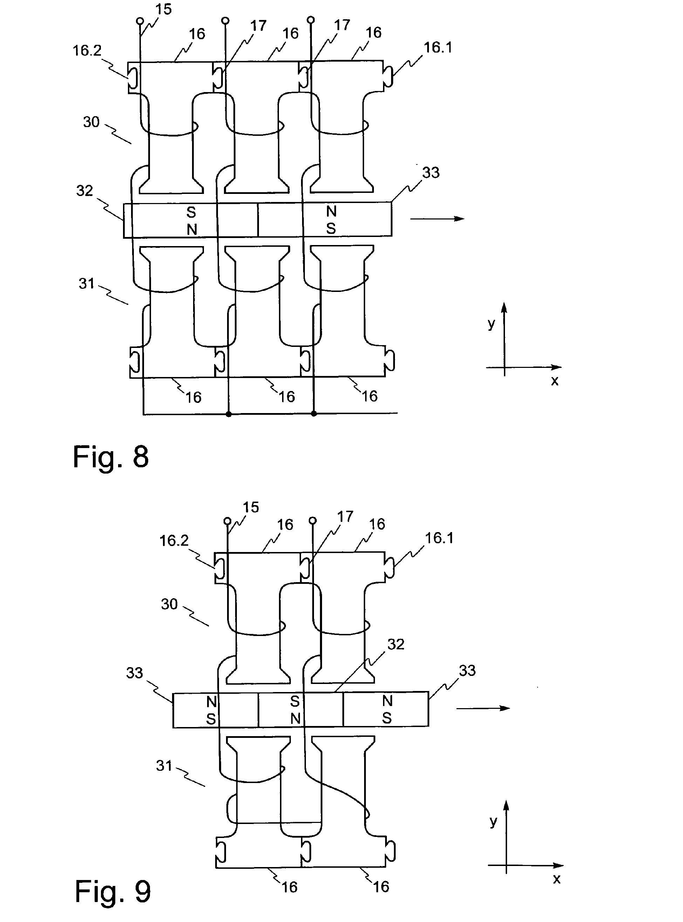

Figur 8 zeigt in einer Prinzipdarstellung eine weitere mögliche Ausführungsform der erfindungsgemässen Maschine in der Ansicht von vorn. Bei dieser Ausführungsform ist die Maschine als Linearantrieb oder als Lineargenerator verwendbar.

Mehrere Zähne 16 sind geradlinig nebeneinander angeordnet und bilden eine erste Reihe 30. In einem definierten Abstand unterhalb der ersten Reihe 30 ist eine zweite Reihe 31 mit weiteren Zähnen 16 vorgesehen. Die Blechkerne der Zähne 16 der beiden Reihen 30 und 31 sind gleich aufgebaut, und so angeordnet, dass sich jeweils die Zahnfüsse gegenüberstehen.

Die Blechkerne der Zähne 16 sind ähnlich wie die Blechkerne der Zähne 6 aufgebaut und über schwalbenschanzförmige Formschlüsse 17 miteinander verbunden. Bei den schwalbenschanzförmigen Formschlüssen 17 sind die Ecken des Stegs und die entsprechenden Ecken in den Ausnehmungen abgerundet. Die exakte Form des schwalbenschanzförmigen Formschlusses hängt unter anderem von den auftretenden Kräften, dem gewünschten magnetischen Fluss und den baulichen Gegebenheiten ab und kann von Fall zu Fall entsprechend angepasst werden.

Zwischen der ersten Reihe 30 und der zweiten Reihe 31 ist eine Reihe von Permanentmagneten 32, 33 angeordnet. Zudem ist zwischen der ersten Reihe 30 und der Reihe Permanentmagneten ein erster Luftspalt und der zweiten Reihe 31 und der Reihe Permanentmagneten ein zweiter Luftspalt vorgesehen. Die Permanentmagneten 32, 33 sind so angeordnet, dass sich deren Nord-Süd-Orientierung abwechselt.

Jeder der Zähne 16 trägt jeweils Wicklungen. Der Wicklungssinn und die Verschaltung der einzelnen Wicklungen ist ebenfalls aus Figur 8 zu entnehmen.

Mit dieser Ausführungsform der Maschine kann beispielsweise ein Antrieb für eine Magnetbahn realisiert werden. Der so ausgebildete Antrieb kann mit Drehstrom versorgt werden, wobei dessen Frequenz die Bewegungsgeschwindigkeit vorgibt. Die Bewegung der Zähne 16 erfolgt parallel zur x-Achse.

Figur 9 zeigt eine Prinzipdarstellung einer dritten mögliche Ausführungsform der erfindungsgemässen Maschine in der Ansicht von vorn. Auch bei dieser Ausführungsform ist die Maschine als Linearantrieb oder als Lineargenerator verwendbar.

Wie auch bei der Ausführungsform gemäss Figur 8 sind bei der Ausführungsform gemäss Figur 9 mehrere Zähne 16 geradlinig nebeneinander angeordnet und bilden eine erste Reihe 30. In einem definierten Abstand unterhalb der ersten Reihe 30 ist eine zweite Reihe 31 mit weiteren Zähnen 16 vorgesehen. Die Blechkerne der Zähne 16 der beiden Reihen 30 und 31 sind gleich aufgebaut, und so angeordnet, dass sich jeweils die Zahnfüsse gegenüberstehen.

Die Blechkerne der Zähne 16 weisen den selben Aufbau wie bei der Ausführungsform gemäss Figur 8 auf.

Der Wicklungssinn und die Verschaltung der einzelnen Wicklungen 15 sind ebenfalls aus Figur 9 zu entnehmen.

Wird diese Ausführungsform der Maschine mit einer sinusförmigen Wechselspannung beaufschlagt, dient sie als Antrieb, der eine geradlinige hin und her Bewegung parallel zur x-Achse ausführt. Die Bewegung erfolgt sinusförmig. Die Frequenz der angelegten Wechselspannung bestimmt die Geschwindigkeit, mit der die Zähne hin und her bewegt werden. Ein derartiger Antrieb kann beispielsweise bei einer Kolbenmaschine den Kurbeltrieb ersetzen.

Werden hingegen bei dieser Ausführungsform der Maschine die Zähne 16 relativ zu den Permanentmagneten hin und her bewegt, dient die Maschine als Generator und erzeugt eine einphasige sinusförmige Wechselspannung, die an den Klemmen abgegriffen werden kann. Dabei spielt es für die Spannungserzeugung keine Rolle, ob die Zähne 16 oder die Permanentmagneten 33 bewegt werden.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So ist beispielsweise die in den Figuren 8 und 9 gezeigte Form der formschlüssigen Verbindung auch bei den in den Figuren 1 bis 7 gezeigten Komponenten der erfindungsgemässen Maschine einsetzbar.

### Bezugszeichenliste

- 1: Dynamoelektrische Maschine
- 2: Rotor
- 3: Stator
- 4: Welle
- 5: Permanentmagnet
- 6: Zahn
- 7: Schraubkontakt
- 8: Schraubkontakt
- 9: Verschraubung
- 10: elektrischer Kontakt
- 11: Rotorring
- 11.1: Aufnahme im Rotorring
- 12: Blechlamelle
- 12.1: Schwalbenschwanz
- 12.2: schwalbenschwanzförmige Nut
- 12.3: Zahnfuss
- 12.4: Zahnkopf
- 13: Isolator
- 14: Isolator
- 15: Wicklung
- 16: Zahn
- 16.1: Steg mit Umgriff
- 16.2: Ausnehmung
- 17: Formschluss
- 18: äussere Blechlamelle
- 19: Trägerelement
- 30: erste Reihe Zähne
- 31: zweite Reihe Zähne
- 32: Permanentmagnet
- 33: Permanentmagnet
- x: x-Achse
- y: y-Achse
- z: z-Achse
- S: Südpol
- N: Nordpol

## Patentansprüche

1. Dynamoelektrische Maschine,
- bei der mehrere Zähne (6; 16) vorgesehen sind, welche Wicklungen (15) tragen,
- bei der benachbarte Zähne (6; 16) formschlüssig miteinander verbunden sind, wobei der Formschluss (17) in mindestens vier Richtungen wirkt, und
- mit mehreren Permanentmagneten (5; 32, 33), die gegenüber den Zähnen (6; 16) angeordnet sind.

2. Maschine nach Patentanspruch 1,
bei der der Formschluss (17) zwischen den Zähnen (6; 16) durch eine hintergreifende Verbindung (12.1, 12.2; 16.1, 16.2) erfolgt.

3. Maschine nach Patentanspruch 1 oder 2,
bei der der Formschluss (17) zwischen den Zähnen (6; 16) durch eine schwalbenschanzförmige Verbindung (12.1, 12.2; 16.1, 16.2) erfolgt.

4. Maschine nach einem der Patentansprüche 1 bis 3, bei der die Zähne (6) ringförmig angeordnet sind.

5. Maschine nach Patentanspruch 4,
bei der die Permanentmagnete (5) konzentrisch zu den Zähnen (6) angeordnet sind.

6. Maschine nach Patentanspruch 1, 2 oder 3,
bei der die Zähne (16) linear angeordnet sind.

7. Maschine nach Patentanspruch 6,
bei der die Zähne (16) in einer ersten Reihe (30) und in einer zweiten Reihe (31) angeordnet sind.

8. Maschine nach einem der Patentansprüche 1 bis 7,
bei der die Zähne (6) einen im Wesentlichen viereckigen Querschnitt aufweisen.

9. Maschine nach einem der Patentansprüche 1 bis bei der der Zahn (6; 16) einen Stapel Blechlamellen (12) aufweist.

10. Maschine nach Patentanspruch 9,
bei der der Stapel äussere Blechlamellen (18) und innere Blechlamellen (12) aufweist, wobei die äusseren Blechlamellen (18) eine kleinere Querschnittsfläche als die inneren Blechlamellen (12) aufweisen.

11. Maschine nach Patentanspruch 9 oder 10,
bei der die Kornorientierung in den Blechlamellen (12, 18) auf die Richtung des magnetischen Flusses abgestimmt ist.

12. Maschine nach einem der Patentansprüche 1 bis 11, bei der benachbarte Zähne (6; 16) zueinander isoliert sind.

13. Maschine nach einem der Patentansprüche 1 bis 12, bei der die formschlüssige Verbindung (17) elektrisch isolierend ausgebildet ist.

14. Verwendung der Maschine nach einem der Patentansprüche 1 bis 13,
als Antrieb für ein Fahrzeug, einen Aufzug, einen Ventilator oder als Generator.
